(19) Europäisches Patentamt
European Patent Office
Office européen des brevets

(11) Veröffentlichungsnummer: **0 667 222 A2**

# (12) EUROPÄISCHE PATENTANMELDUNG

(21) Anmeldenummer: **95101608.8**

(22) Anmeldetag: **07.02.95**

(51) Int. Cl.⁶: **B29C 33/68**, B29C 43/36, B29C 43/48, F16J 15/10

(30) Priorität: **12.02.94 DE 4404581**

(43) Veröffentlichungstag der Anmeldung: **16.08.95 Patentblatt 95/33**

(84) Benannte Vertragsstaaten: **AT BE CH DE DK ES FR GB IT LI NL SE**

(71) Anmelder: **Röhm GmbH**
**Kirschenallee**
**D-64293 Darmstadt (DE)**

(72) Erfinder: **Schäfer, Stefan**
**Am Wiesengrund 11**
**D-64625 Bensheim (DE)**

## (54) Dichtschnur.

(57) Die Erfindung betrifft Dichtschnüre mit gleichzeitiger Spannwirkung gegenüber Folien bestehend aus einem an sich üblichen, elastischen Material, die im Profil schenkelförmige Bestandteile aufweisen, wobei das Profil der Dichtschnüre oberhalb und unterhalb des Profilkörpers (1) je ein aus diesem heraustretendes und jeweils mit der oberen bzw. der unteren Begrenzungsfläche (2) bzw. (2') des Profilkörpers (1) einen Winkel α bzw. α' bildendes, nach innen geneigtes, Schenkelpaar (3), (3') sowie (4), (4') besitzt, so daß zwischen den Scheitelpunkten (5), (5') und (6), (6') der Schenkel (3), (3') und (4), (4') die Abstände s bzw. s' bestehen.

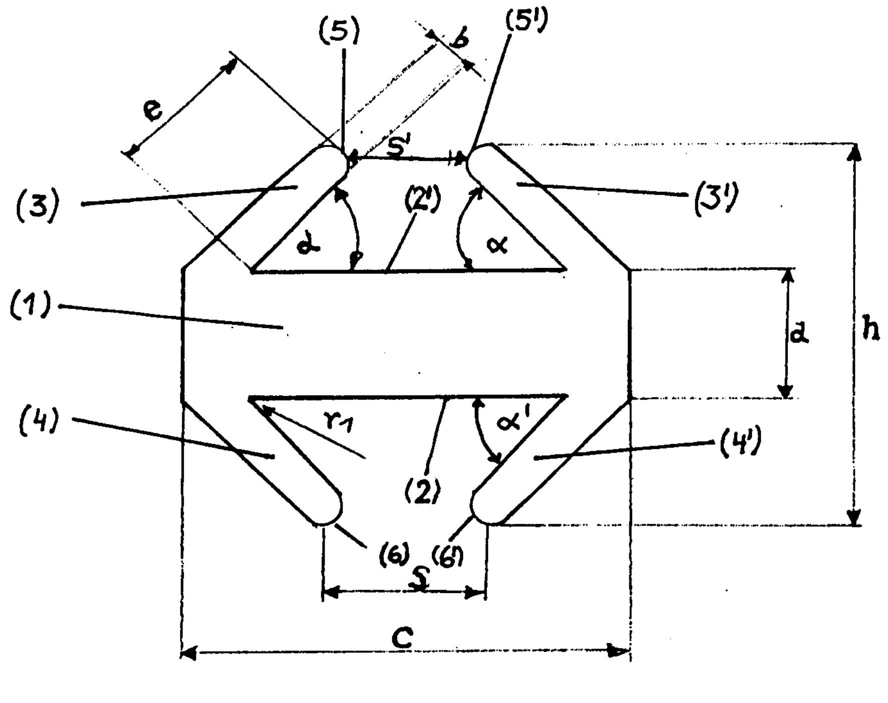


FIG. 1

EP 0 667 222 A2

## Gebiet der Erfindung

Die Erfindung betrifft neue Dichtschnüre mit gleichzeitiger Spannwirkung gegenüber Folien, insbesondere Trenn-, Kaschier- und Laminierfolien in der Kunststofftechnologie und deren Verwendung insbesondere in stationären und kontinuierlichen Gießverfahren.

## Stand der Technik

Die Kunststoff-Technik verwendet mit Vorteil dann Trennfolien, wenn das zu verarbeitende Material nicht unmittelbar mit der Preß- oder Gießform in Berührung kommen soll, beispielsweise wenn es darum geht, unerwünschte Haftung am Werkzeug oder unerwünschte chemische Wechselwirkung zu vermeiden. Weiter kann man Trennfolien gezielt als Strukturgeber einsetzen. Legt man in das formgebende Werkzeug beispielsweise in eine Preß- oder Gießform, sei es, daß diese durch Ober- und Unterplatte oder durch ein Doppelband gebildet wird, eine Trenn-, Kaschier- oder Laminierfolie ein, so neigt diese in eingelegtem Zustand, spätestens jedoch beim Aufheizen der Form zur Faltenbildung. Das Auftreten der Faltenbildung bei Trenn-, Kaschier- oder Laminierfolien läßt sich in der Regel auf die größere thermische Ausdehnung der Folien im Vergleich zum formgebenden Werkzeug, beispielsweise einer Gießform zurückführen. Da in diesem Falle die Ränder der Folie durch die Dichtschnüre festgehalten werden, bilden sich bei der thermischen Ausdehnung Falten und Wellen, die in der Produktoberfläche sehr stören.
Aufheizvorgänge spielen bei praktisch allen Laminierprozessen eine Rolle; sie treten aber auch dort auf, wo in den durch Trennfolien und Dichtschnüren gebildeten Kammern exotherme chemische Reaktionen stattfinden.
Die Technik der Polymerisation von Kunststoffen, insbesondere von Poly(meth)acrylaten wie PMMA zwischen formgebenden Platten, die mit Folien ausgekleidet sein können, ist seit langem bekannt (vgl. DRP 659,469; Rauch-Puntigam, Acryl- und Methacrylverbindungen 274 - 282, Springer Verlag 1976, R. Vieweg, F. Esser, Kunststoff-Handbuch, Bd. IX, Polymethacrylate S. 16 - 21, Carl Hanser Verlag 1975). Als Dichtschnüre bei der Herstellung gegossenen Polymethylmethacrylats zwischen Glasplatten haben sich modifizierte oder vorbehandelte Gummisorten oder Polyethylene, PVC u.ä. bewährt.

## Aufgabe und Lösung

Als Anforderung an die Dicht- und Distanzierungsschnüre wird angegeben, daß die Schnüre die gewünschte Elastizität besitzen und so nachgeben können müssen, daß die entnommene Scheibe möglichst planparallele Oberflächen erhält und ihre Dicke über die ganze Größe hinweg gleich ist. Das Material der Schnüre dürfte die Polymerisation nicht behindern, die Schnüre dürften von den Monomeren nicht angegriffen werden, zum Teil sollen die Schnüre schon während des Polymerisationsprozesses, z.B. nach ca. 30 %igem Umsatz entfernt werden, manchmal sollen die Schnüre jedoch auch in die fertigen Platten einpolymerisieren um als deren Randbegrenzungen dienen zu können (vgl. Vieweg-Esser, loc.cit).
Während für die übliche Gußtechnologie unter direkter Verwendung von Formen aus geschliffenem und poliertem Spiegelglas oder auch aus poliertem Metall seit langem Dichtschnüre zur Verfügung stehen, die den Anforderungen im großen und ganzen genügen, trifft dies bei Verwendung von Trenn-, Kaschier- oder Laminierfolien nicht im selben Maße zu.
Es stellte sich demnach die Aufgabe, eine Dichtschnur zur Verfügung zu stellen, die Dichtevermögen und Folienspannfunktion miteinander kombiniert. Ferner war eine Methode zum biaxialen, planen Verstrecken von Trenn-, Kaschier- oder Laminierfolien in stationären oder kontinuierlichen Gieß- bzw. Preßformen zu entwickeln, wobei aber die herkömmliche Gieß-Technologie zur Herstellung von Kunststoffscheiben, Platten usw. möglichst beizubehalten war.
Das Problem, flexible Dichtungen (Dichtlippen) für relativ starre, flächige Verschlußelemente, wie z.B. Türen, Fenster, Deckel u.ä. zu schaffen, stellt sich vielerorts in der Technik

Aus der DE-A 15 09 393 ist z.B. ein gummielastisches Dichtungsprofil für Türen und Fenster, insbesondere an Luftschutzbauten bekannt. Das Dichtungsprofil ist in eine Nut eingebettet und korrespondiert mit einem Rahmenelement der Tür bzw. des Fensters. Das Profil weist an der dem Rahmenelement zugewandten Seite zwei mit ihren freien Enden einander zugewandte Dichtlippen auf, die sich beide beim Schließen an die dem gegenüberliegenden Rahmen zugeordnete Dichtfläche anlegen.
In der DE-A 27 13 323 ist eine Dichtung aus elastischem Elastomermaterial mit einer axial verlaufenden Nut beschrieben, die an einem Ende offen ist und eine Feder zwischen zwei gegenüberliegenden Wandabschnitten beherbergt. Der Nutgrund besitzt dabei die Form einer Ellipse.
Es wurde nun gefunden daß eine erfindungsgemäß ausgebildete Dichtschnur die geschilderten Aufgaben

sehr gut zu erfüllen vermag.

Die Erfindung betrifft eine Dichtschnur mit gleichzeitiger Spannwirkung bestehend aus einem an sich üblichen elastischen Material mit je einem oberhalb und unterhalb des Profilkörpers (1) der Dichtschnur aus diesem heraustretenden und mit der oberen und unteren Begrenzungsfläche (2) bzw. (2') des Profilkörpers (1) einen Winkel $\alpha$ bzw. $\alpha'$ bildenden, vorzugsweise symmetrisch nach innen zur Begrenzungsfläche (2) bzw. (2') geneigten Schenkelpaar (3) und (3') sowie (4) und (4'), so daß zwischen den Scheitelpunkten (5) und (5') bzw. (6) und (6') der Schenkel (3) und (3') sowie (4) und (4') die Abstände s bzw. s' bestehen. Die Winkel $\alpha$ bzw. $\alpha'$ sind somit definitionsgemäß < 90 Grad.

FIG. 1 zeigt schematisch die Geometrie der Dichtschnur gemäß einer bevorzugten Ausführungsform. Dabei bezeichnet $\alpha$ bzw. $\alpha'$ wie bereits ausgeführt den Schenkelwinkel, b die Schenkelbreite, e die Schenkellänge, c die Profilbreite, h die Profilhöhe, d die Dicke des Profilkörpers (Mittenrestdicke), $r_1$ den Schenkelradius und s bzw. s' die Schenkelöffnung. Die bevorzugte Ausführungsform der Dichtungsschnur sieht ein völlig symmetrisches Profil vor, wodurch auch (2) und (2'), (3) und (3'), (4) und (4'), (5) und (5') sowie s und s' identisch ausgebildet werden.

Gewöhnlich sind die Dichtschnüre so dimensioniert, daß die Profilbreite c als im allgemeinen größte Dimension im Bereich 5 bis 100 mm liegt.

Die Profilhöhe h liegt im allgemeinen im Bereich 5 bis 110 mm. Die Schenkelbreite sowie die Dicke des Profilkörpers d werden bis zu einem gewissen Grad durch die Eigenschaften des gewählten Profilmaterials bestimmt. Als Richtwert sei eine Schenkelbreite b von 0,5 bis 15 mm angegeben, sowie eine Dicke des Profilkörpers d von 2 bis 70 mm.

Die Steifigkeit der Dichtschnur und damit ihre Dichtkraft als Funktion des Preßwegs beruht auf dem Elastizitätsmodul des verwendeten Werkstoffs sowie der Kombination aus Schenkelwinkel $\alpha$, Schenkelbreite b, Schenkellänge e, Profilbreite c, Profilhöhe h, Dichte des Profilkörpers d, Schenkelradius $r_1$ und Schenkelöffnung s bzw. s'.

Im Prinzip stehen für die Wahl des Werkstoffs viele Möglichkeiten offen, wobei hinreichende Unempfindlichkeit gegenüber den Monomeren bzw. gegenüber dem überwiegend verwendeten Praepolymerisat sowie ein bestimmter Grad von Elastizität vorauszusetzen ist. Dadurch eröffnet sich aber auch eine breite Palette von Möglichkeiten hinsichtlich der chemischen, mechanischen und thermischen Eigenschaften.

Als Richtwerte für die Elastizität seien die E-Moduli von PE und Weich-PVC angegeben.

| Werkstoff | E-Modul ($N/mm^2$) |
|---|---|
| LDPE | 150 - 600 |
| HDPE | 400 - 1 500 |
| Weich-PVC | 450 - 600 |
| (Vgl. Dubbel, Taschenbuch für den Maschinenbau, 17. Auflage, Seite E 114) | |

Mit Vorteil werden somit beispielsweise Polyethylen, sowie dessen Co-Polymere aber auch Weich-PVC angewendet. (Bestimmung des Elastizitätsmoduls gemäß DIN 53 457).

Infolge der speziellen Gestaltung des Profils, d.h. aufgrund der nach innen geneigten Schenkel, die bei Kompressionsbelastung zur Mitte hin ausweichen, ergibt sich bei dem ohnehin wegen der Konstruktion der Polymerisationskammern auszuübenden Druck auf die abschließenden Dichtungsprofilschnüre, ein Spanneffekt auf die eingelegten Trenn-, Kaschier- oder Laminierfolien, während sich zwischen den Schenkeln (3) und (3') bzw. (4) und (4') das Folienmaterial entsprechend aufwirft (vgl. FIG. 2). Die Gestaltung des Profils der Dichtschnüre erlaubt eine beträchtliche Variabilität der Klemm- und damit der Dichtkraft sowie des Straffungsvermögens durch Variation des Schenkelwinkels , der Schenkelbreite b, der Schenkellänge 1, der Profilbreite c, der Profilhöhe h, der Dicke des Profilkörpers d, des Schenkelradius $r_1$ sowie der Schenkelöffung s.

Bei plattenförmigen Gießkammern werden die Folien in der Regel somit biaxial verstreckt und damit gestrafft. Bei Doppelbandanlagen kann die Dichtschnur nur in Breitenrichtung strecken. Die Längenstrekkung erfolgt in diesem Fall durch ein Bremsmoment an der Abwickelstelle der Folie.

Die vorliegende Erfindung bewirkt somit, daß in stationären Pressen und Gießstationen die Trenn-, Kaschier- oder Laminierfolie mittels der umlaufenden Dichtschnur biaxial faltenfrei gespannt wird, sobald die Gieß- oder Preßform geschlossen wird.

Von besonderem Interesse ist der Umstand, daß die Dichtschnur aufgrund ihrer elastischen Eigenschaft auch nach dem Schließen der Form in der Lage ist, Breitenänderungen der Trenn-, Kaschier- oder Laminierfolie durch Nachgeben der Schenkel nachzustraffen.

Die im Rahmen der vorliegenden Erfindung einzusetzenden Folin entsprechen dem Stand der Technik. Zweckmäßig liegt ihr Schmelzpunkt oberhalb der bei den formgebenden Verfahren, wesentlichen Gieß- und Preßverfahren, auftretenden Temperaturen.

Als Folie eignen sich insbesondere an sich bekannte Folien, beispielsweise aus Polyolefinen wie Polyethylen, Polypropylen, Ethylen-Vinylacetatcopolymeren, Polyvinylacetat, Polystyrol, Celluloseacetat, Polyethylenterephthalat (PET), u.ä. (Vgl. H.F. Mark et al. Encyclopedia of Polymer Science & Engineering Vol. 7, 73 - 127, J. Wiley 1987).

Die Auswahl der Folien efolgt im Hinblick auf den Einsatzzweck, beispielsweise ob es sich um eine Trenn-, Kaschier- oder Laminierfolie handelt. Die Folien besitzen im allgemeinen eine Dicke im Bereich 5 bis 250 µm, insbesondere 20 bis 100 µm, während die Flächen-Abmessungen der Folie der abzudeckenden Fläche angepaßt werden.

Die Folienspannfunktion der erfindungsgemäßen Dichtschnur mit gleichzeitiger Spannwirkung geht aus den FIG. 2 und 3 hervor. FIG. 2 zeigt die erfindungsgemäßen Dichtschnüre, im Montagezustand zwischen Ober- und Unterplatte (7) bzw. (8) des formgebenden Werkzeugs die jeweils mit den Folien (9) bzw. (9') belegt sind. Die Folien (9) bzw. (9') zeigen dabei die übliche Falten- bzw. Wellenbildung.

FIG. 3 zeigt dieselbe Anordnung nach Anwendung von Kompressionsdruck. Dabei gehen die Winkel $\alpha$ bzw. $\alpha'$ in die Winkel $\alpha_1$ bzw. $\alpha'_1$ über, gleichzeitig wird die Höhe h zu $h_1$ und s zu $s_1$ reduziert. Das Anlegen des Kompressionsdrucks führt somit zur Glättung der Folien (9) bzw. (9'), wie aus FIG. 3 ersichtlich.

## Patentansprüche

1. Dichtschnur mit gleichzeitiger Spannwirkung gegenüber Folien bestehend aus einem an sich üblichen, elastischen Material, die im Profil schenkelförmige Bestandteile aufweist,
   dadurch gekennzeichnet,
   daß das Profil der Dichtschnur oberhalb und unterhalb des Profilkörpers (1) je ein aus diesem heraustretendes und jeweils mit der oberen bzw. der unteren Begrenzungsfläche (2) bzw. (2') des Profilkörpers (1) einen Winkel $\alpha$ bzw. $\alpha'$ bildendes, nach innen geneigtes, Schenkelpaar (3), (3') sowie (4), (4') besitzt, so daß zwischen den Scheitelpunkten (5), (5') und (6), (6') der Schenkel (3), (3') und (4), (4') die Abstände s bzw. s' bestehen.

2. Dichtschnur gemäß Anspruch 1, dadurch gekennzeichnet, daß die Schenkelpaare (3), (3') sowie (4), (4') identisch ausgebildet und symmetrisch angeordnet sind.

3. Verwendung der Dichtschnur gemäß den Ansprüchen 1 und 2 zusammen mit Trenn-, Kaschier- und Laminierfolien.

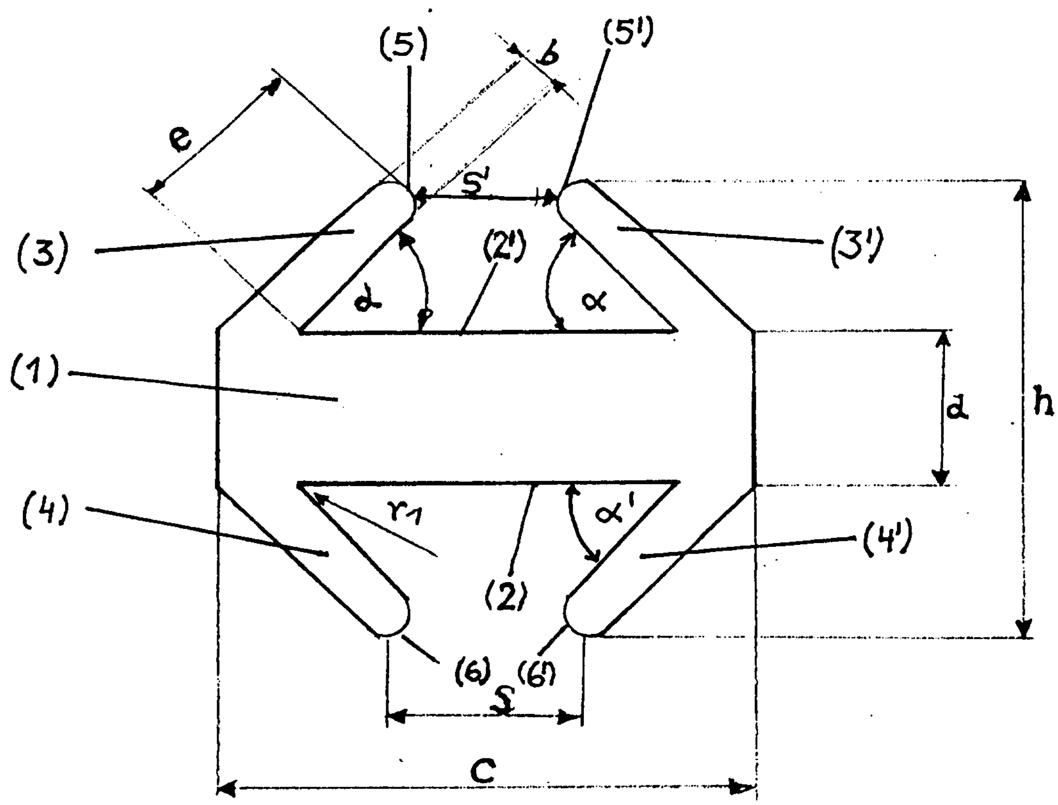


FIG. 1

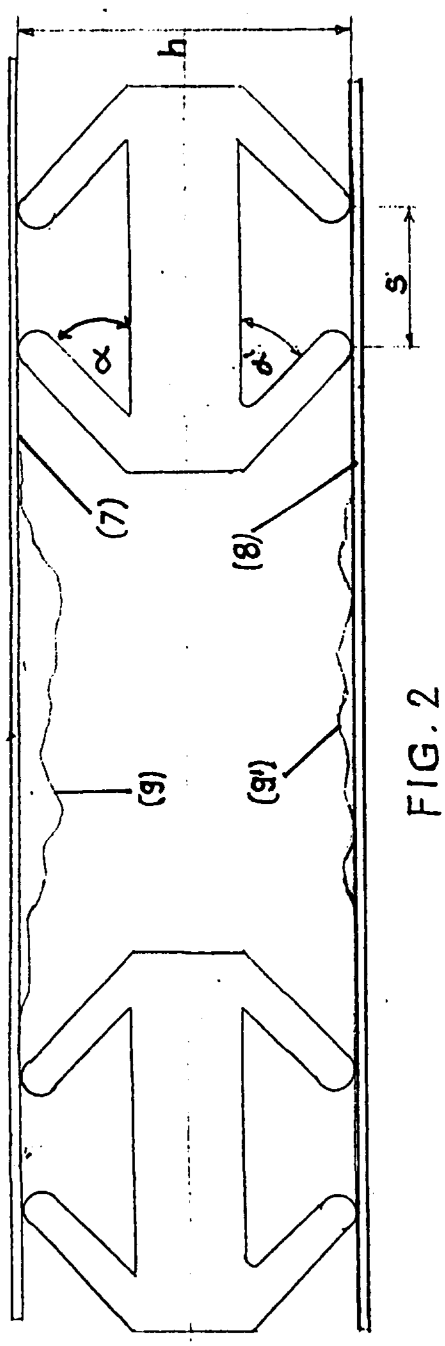


FIG. 2

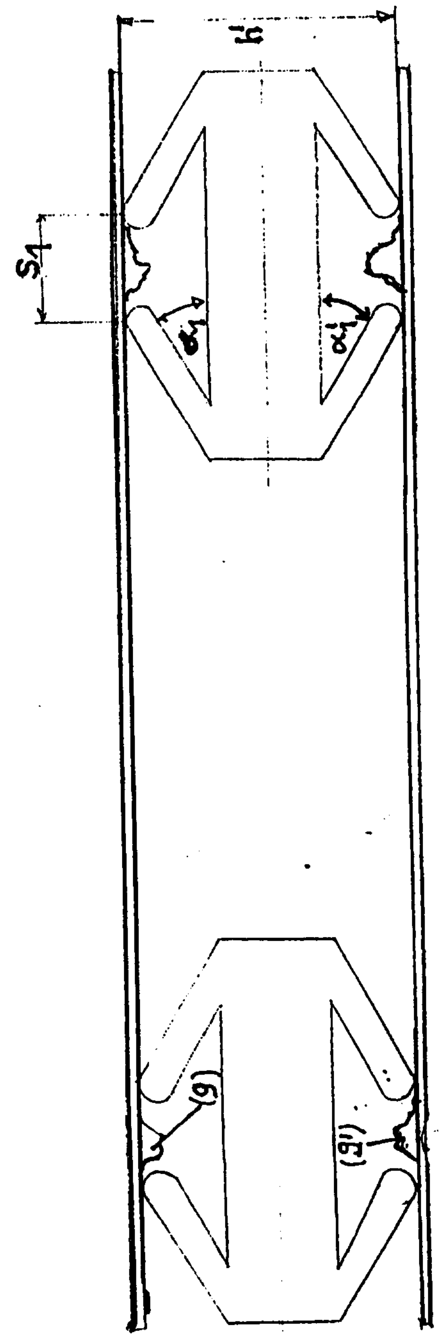


FIG. 3